# EUROPÄISCHE PATENTANMELDUNG

(11) **EP 2 520 610 A1**
(43) Veröffentlichungstag der Anmeldung: **07.11.2012**
(21) Anmeldenummer: 11164868.9
(22) Anmeldetag: 05.05.2011
(51) Int. Cl.: C08J 9/12, C08L 35/06

(54) **Wärmeformbeständiger und Flämmgeschützter Extrusionsschaumstoff aus Styrolcopolymeren**

(71) Anmelder: BASF SE, 67056 Ludwigshafen (DE)
(72) Erfinder: Die Erfindernennung liegt noch nicht vor

(57) **Zusammenfassung**

Ein Extrusionsschaumstoff auf Basis von thermoplastischen Polymeren P, welcher
P1) 50 bis 100 Gewichtsteile, bevorzugt 55 bis 75 Gewichtsteile eines oder mehrerer Styrolcopolymeren, welche einpolymerisierte Maleinsäureanhydrid- oder Maleinsäureimid-Einheiten enthalten und eine Styrolgehalt im Bereich von 65 bis 90 Gew.-%, bezogen auf P1, aufweisen,
P2) 0 bis 50 Gewichtsteile, bevorzugt 30 bis 45 eines oder mehrerer Styrol-Acrylnitril-Copolymeren (SAN) mit einem Styrolgehalt im Bereich von 65 bis 90 Gew.-%, bezogen auf P2,
P3) 0 bis 15 Gewichtsteile, bevorzugt 0 bis 10 Gewichtsteile eines oder mehrerer thermoplastischen Polymeren aus der Gruppe bestehend aus von P1 und P2 verschiedenen Styrolpolymeren, Polyacrylaten, Polycarbonaten, Polyestern, Polyamiden, Polyethersulfonen, Polyetherketonen und Polyethersulfiden,

wobei die Summe aus den Polymerkomponenten (P1), (P2) und (P3) der thermoplastischen Polymeren P 100 Gewichtsteile ergeben,
F1) 5 bis 15 Gewichtsanteile, bevorzugt 7 bis 10 Gewichtsteile, bezogen auf P, mindestens eines halogenhaltigen Polymeren als Flammschutzmittel,
F2) 0,5 bis 4 Gewichtsanteile, bevorzugt 1 bis 3 Gewichtsteile, bezogen auf P, mindestens eines Flammschutzsynergisten, ausgewählt aus Antimontrioxid und Dicumyl,
Z) 0 bis 10 Gewichtsanteile, bevorzugt 0,1 bis 5 Gewichtsteile, bezogen auf P, weiterer Zusatzstoffe,

enthält, ein Verfahren zu dessen Herstellung unter Einbringen von
T1) 1 bis 5 Gewichtsteilen, bezogen auf P, Kohlendioxid als Treibmittel,
T2) 1 bis 5 Gewichtsteilen, bezogen auf P, Aceton als Cotreibmittel,
T3) 0 bis 1 Gewichtsteilen, bezogen auf P, eines oder mehrerer Co-Treibmittel ausgewählt aus der Gruppe bestehend aus C₁-C₄ Alkanen.

in die Polymerschmelze zur Ausbildung einer schäumbaren Schmelze, und Extrusion der schäumbaren Schmelze in einen Bereich niedrigeren Drucks unter Aufschäumen zu dem Extrusionsschaum, sowie die Verwendung dieses Schaumstoffs als Isoliermaterial und als Strukturschaumstoff.

## Beschreibung

Die Erfindung betrifft einen wärmeformbeständigen und flammgeschützten Extrusionsschaumstoff, auf Basis von thermoplastischen Polymeren P, enthaltend Styrol-Maleinsäureanhydrid-Copolymere (SMA), Styrol-Phenylmaleinsäureimid-Copolymeren (SPMI) oder Styrol-Acrylnitril-Maleinsäureanhydrid-Terpolymere (SANMA). Weiterhin betrifft die Erfindung ein Verfahren zur Herstellung des Extrusionsschaumstoffs sowie dessen Verwendung als Isoliermaterial und als Strukturschaum.

Extrusionsschaumstoffe auf Polystyrolbasis werden in großem Maß in der Bauindustrie zum Isolieren von Gebäudeteilen wie Fundamenten, Wänden, Böden und Dächern eingesetzt. Für diese Anwendung werden Extrusionsschaumstoffe benötigt, die eine möglichst geringe Wärmeleitfähigkeit und damit eine große Isolationsfähigkeit besitzen. Um gute Isolationseigenschaften zu erreichen, werden bevorzugt geschlossenzellige Extrusionsschaumstoffe eingesetzt, da diese im Vergleich zu offenzelligen Extrusionsschaumstoffen eine deutlich bessere Isolationsfähigkeit aufweisen.

Für den Einsatz von Extrusionsschaumstoffen in der Bauindustrie wird von diesen neben guten Isolationseigenschaften auch eine gute Wärmeformbeständigkeit bei geringer Dichte erwartet. Vor allem für Anwendungen, bei denen die Schaumstoffe hohen Temperaturen ausgesetzt sind, ist die Wärmeformbeständigkeit sehr wichtig, da es sonst zu Verformungen der Extrusionsschaumstoffe und somit zu einer Beschädigung der Isolierung kommen kann. Bauteile, bei denen eine gute Wärmeformbeständigkeit eine besondere Rolle spielt, sind beispielsweise Dachisolierungen und Wandisolierungen, die direkter Sonneneinstrahlung ausgesetzt sind.

Neben guten Isolationseigenschaften und guter Wärmeformbeständigkeit sollten Extrusionsschaumstoffe auch eine gute Beständigkeit gegenüber Lösungsmitteln, vor allem gegenüber Öl und Mineralöl, aufweisen. Dies ist insbesondere für Bauteile erforderlich, die im unteren Wand-, im Fundament- und im Bodenbereich eingesetzt werden.

Die NL-C 1 005 985 betrifft einen Polymerschaumstoff mit feiner und homogener Zellstruktur, welcher als wesentliche Komponente ein Styrolcopolymer mit einem Anteil von 18 bis 35 mol.-% an Monomereinheiten eines Anhydrides bzw. dessen Imids, beispielsweise Styrol-Maleinsäureanhydrid-Copolymere enthält und mit Wasser als Treibmittel geschäumt wird.

Die EP-A 1 479 717 offenbart ein Verfahren zur Herstellung von Schaumstoffplatten auf Basis von Styrol-Acrylnitril-Copolymeren, die eine verbesserte Lösungsmittelbeständigkeit aufweisen. Als Treibmittel oder Treibmittelkomponente wird Wasser, gegebenenfalls in Kombination mit CO2 und/oder weiteren organischen Treibmitteln eingesetzt. Die nach diesem Verfahren erhältlichen Schaumstoffplatten weisen eine gute Lösungsmittelbeständigkeit auf. Im Hinblick auf die Wärmeformbeständigkeit und die Isolationseigenschaften besteht jedoch noch Verbesserungspotenzial.

Die WO 2011/026979 beschreibt einen geschlossenzelligen Extruionsschaumstoff, erhältlich durch Extrusion von ein oder mehrere Styrol-Acrylnitril-Copolymeren mit Kohlendioxid als Treibmittel und eine oder mehreren Co-Treibmitteln, ausgewählt aus der Gruppe bestehend aus C1-C4-Alkoholen und C1-C4-Carbonylverbindungen.

Die WO 2008/069865 beschreibt Styrol-Acrylnitril-Copolymer-Schaumstoffe, die ein oder mehrere Infrarot-absorbierende Additive enthalten und ein hohe Dimensionsstabilität bei höheren Temperaturen aufweisen.

Die JP-A 2007-238926 beschreibt thermoplastische Schaumstoffe mit hoher Wärmeformbeständigkeit, die zur Flammschutzbeständigkeit mit bromierten Flammschutzmitteln, die in der thermogravimetischen Analyse einen Gewichtsverlust von 5 % bei Temperaturen über 270°C aufweisen, ausgerüstet sind.

Die Aufgabe der vorliegenden Erfindung war es, einen Extrusionsschaumstoff bereitzustellen, der neben Flammschutz auch gute Isolationseigenschaften, gute Lösungsmittel- und gute Wärmeformbeständigkeit aufweist. Der Extrusionsschaumstoff sollte insbesondere für die Wärmedämmung von Warmdächern, die mit Bitumenbahnen abgedeckt werden, geeignet sein.

Demgemäß wurde ein Extrusionsschaumstoff auf Basis von thermoplastischen Polymeren P gefunden, welcher
P1) 50 bis 100 Gewichtsteile, bevorzugt 55 bis 75 Gewichtsteile eines oder mehrerer Styrolcopolymeren, welche einpolymerisierte Maleinsäureanhydrid- oder Maleinsäureimid-Einheiten enthalten und eine Styrolgehalt im Bereich von 65 bis 90 Gew.-%, bezogen auf P1, aufweisen,
P2) 0 bis 50 Gewichtsteile, bevorzugt 30 bis 45 eines oder mehrerer Styrol-Acrylnitril-Copolymeren (SAN) mit einem Styrolgehalt im Bereich von 65 bis 90 Gew.-%, bezogen auf P2,
P3) 0 bis 15 Gewichtsteile, bevorzugt 0 bis 10 Gewichtsteile eines oder mehrerer thermoplastischen Polymeren aus der Gruppe bestehend aus von P1 und P2 verschiedenen Styrolpolymeren, Polyacrylaten, Polycarbonaten, Polyestern, Polyamiden, Polyethersulfonen, Polyetherketonen und Polyethersulfiden,

wobei die Summe aus den Polymerkomponenten (P1), (P2) und (P3) der thermoplastischen Polymeren P 100 Gewichtsteile ergeben,
F1) 5 bis 15 Gewichtsanteile, bevorzugt 7 bis 10 Gewichtsteile, bezogen auf P, mindestens eines halogenhaltigen Polymeren als Flammschutzmittel,
F2) 0,5 bis 4 Gewichtsanteile, bevorzugt 1 bis 3 Gewichtsteile, bezogen auf P, mindestens eines Flammschutzsynergisten, ausgewählt aus Antimontrioxid und Dicumyl,
Z) 0 bis 10 Gewichtsanteile, bevorzugt 0,1 bis 5 Gewichtsteile, bezogen auf P, weiterer Zusatzstoffe, enthält.

Weiterhin Gegenstand der Erfindung ist das beschriebene Verfahren zur Herstellung des erfindungsgemäßen Extrusionsschaumstoffs sowie die Verwendung dieses Schaumstoffs als Isoliermaterial und als Strukturschaumstoff.

Der erfindungsgemäße Extrusionsschaumstoff weist eine Zellzahl im Bereich 1 bis 30 Zellen pro mm, bevorzugt von 3 bis 20 Zellen pro mm, insbesondere von 3 bis 25 Zellen pro mm auf.

Die Dichte des erfindungsgemäßen Extrusionsschaumstoffes liegt bevorzugt im Bereich von 20 bis 150 kg/m3, besonders bevorzugt im Bereich von 20 bis 60 kg/m3.

In der Regel weist der erfindungsgemäße Extrusionsschaumstoffe eine Druckfestigkeit, gemessen nach DIN EN 826, im Bereich von 0,15 bis 6 N/mm2, bevorzugt im Bereich von 0,3 bis 1 N/mm2, auf.

Der erfindungsgemäße Extrusionsschaumstoff ist bevorzugt geschlossenzellig, d.h. dass die Zellen gemessen nach DIN ISO 4590 zu mindestens 90 %, insbesondere zu 95-100% geschlossen sind.

Der erfindungsgemäße Extrusionsschaumstoff ist flammgeschützt und erfüllt beispielsweise die Anforderungen von genormten Brandtests nach DIN 4102 B2, europäischer Einstufung (Class E) und -je nach Zusammensetzung bzw. Zwischenlagerzeit nach der Produktion - nach DIN 4102 B1.

Die erfindungsgemäß als Polymerkomponente P eingesetzten Styrolcopolymeren (P1), welche einpolymerisierte Maleinsäureanhydrid- oder Maleinsäureimid-Einheiten enthalten, Styrolacrylnitrilcopolymer (SAN) (P2) und die thermoplastischen Polymere (P3) können nach dem Fachmann bekannten Verfahren, beispielsweise durch radikalische, anionische oder kationische Polymerisation in Substanz, Lösung, Dispersion oder Emulsion hergestellt werden. Bevorzugt ist im Falle von SAN und SMA die Herstellung durch radikalische Polymerisation.

Bevorzugt weisen die Polymere P1 als auch Mischungen mit der thermoplastischen Polymeren P eine Glasübergangstemperatur Tg von 120°C oder höher, bevorzugt im Bereich von 125 bis 210°C, gemessen mittels DSC nach DIN 53765 (ISO 11357-2) bei einer Aufheizrate von 20 K/min, aufweisen. Die Glasübergangstemperatur kann nach mittels dynamische Differenzkalorimetrie (Differential Scanning Calorimetry, DSC) bei einer Aufheizrate von 20 K/min bestimmt werden.

Der erfindungsgemäße Extrusionsschaumstoff enthält als Komponente (P1) 50 bis 100 Gewichtsteile, bevorzugt 55 bis 75 Gewichtsteile eines oder mehrerer Styrolcopolymeren, welche einpolymerisierte Maleinsäureanhydrid- oder Maleinsäureimid-Einheiten enthalten und eine Styrolgehalt im Bereich von 65 bis 90 Gew.-%, bezogen auf P1, aufweisen.

Die Komponente (P1) besteht aus einem oder mehreren Styrolcopolymeren, welches einpolymerisierte Maleinsäureanhydrid- oder Maleinsäureimid-Einheiten enthält. Vorzugsweise besteht P1 aus 10 bis 45 Gew.-%, bevorzugt 15 bis 30 Gew.-% einpolymerisiertes Maleinsäureanhydrid oder Maleinimide und 65 bis 90 Gew.-%, bevorzugt 70 bis 85 Gew.-% einpolymerisiertes vinylaromatisches Monomer, insbesondere Styrol.

Bevorzugte Maleinimide sind Maleinimid selbst, N-Alkyl-substituierte Maleinimide (vorzugsweise mit C₁-C₆-Alkly) und N-Phenyl-substituierte Maleinimide.

Besonders bevorzugt werden als Komponente (P1) Styrol-Maleinsäureanhydrid-Copolymere (SMA), Styrol-Phenylmaleinsäureimid-Copolymere (SPMI), Styrol-Maleinsäureanhydrid-Phenylmaleinimid-Terpolymere (SMAPMI), Styrol-Acrylnitril-Maleinsäureanhydrid-Terpolymeren (SANMA) oder Mischungen davon eingesetzt.

Der erfindungsgemäße Extrusionsschaumstoff enthält als Komponente (P2) 0 bis 50 Gewichtsteile, bevorzugt 30 bis 45 eines oder mehrerer Styrol-Acrylnitril-Copolymeren (SAN) mit einem Styrolgehalt im Bereich von 65 bis 90 Gew.-%, bezogen auf (P2).

Die SAN Komponente (P2) enthält - soweit vorhanden - im Allgemeinen 18 bis 40 Gew.-%, bevorzugt 25 bis 35 Gew.-% und insbesondere 30 bis 35 Gew.-% einpolymerisiertes Acrylnitril und im Allgemeinen 60 bis 82 Gew.-%, bevorzugt 65 bis 75 Gew.-% und insbesondere bevorzugt 65 bis 75 Gew.-% einpolymerisiertes Styrol (jeweils bezogen auf SAN).

Das SAN (P2) kann gegebenenfalls 0 bis 22 Gew.-% mindestens eines einpolymerisierten Monomers aus der Gruppe bestehend aus Alkyl(meth)acrylaten, (Meth)acrylsäure, Maleinsäureanhydrid und Maleinimiden enthalten. In einer bevorzugten Ausführungsform besteht das SAN ausschließlich aus Styrol und Acrylnitril.

Die erfindungsgemäß eingesetzten SAN (P2) weisen im Allgemeinen eine Schmelzvolumenrate MVR (220°C/ 10 kg) nach ISO 113 im Bereich von mehr als 5 cm³ / 10 min auf, bevorzugt mehr als 20 cm³ / 10 min und besonders bevorzugt mehr als 50 cm³ / 10 min.

Geeignete SAN-Typen sind beispielsweise Luran® 3380, Luran® 33100, Luran® 2580, Luran® 2560 und Luran® VLN der Styrolution GmbH.

Bevorzugt werden mittelviskose und niedrigviskose Typen der Polymeren (P1) und (P2) eingesetzt. Bevorzugt liegt die Viskositätszahl, gemessen nach DIN 53737 im Bereich von 40 bis 80 ml/g (gemessen in einer 0,5 gew.-%igen Lösung in Dimethylformamid bei 23°C)..

Der erfindungsgemäße Extrusionsschaumstoff enthält als Komponente (P3) 0 bis 15 Gewichtsteile, bevorzugt 0 bis 10 Gewichtsteile eines oder mehrerer thermoplastischen Polymeren aus der Gruppe bestehend aus von (P1) und (P2) verschiedenen Styrolpolymeren, Polyacrylaten, Polycarbonaten, Polyestern, Polyamiden, Polyethersulfonen, Polyetherketonen und Polyethersulfiden.

Als thermoplastische Polymere (P3) der Polymerkomponente P werden gegebenenfalls Styrolpolymere und -copolymere, beispielsweise Acrylnitril-Butadien-Styrol (ABS), Acrynitril-Styrol-Acrylester (ASA) und Styrol-Methacrylsäure.; Polyolefine beispielsweise Polypropylen (PP) Polyethylen (PE) und Polybutadien; Polyacrylate beispielsweise Polymethylmethacrylat (PMMA); Polycarbonate (PC); Polyester beispielsweise Polyethylenterephthalat (PET) und Polybutylenterephthalat (PBT); Polyamide beispielsweise Polyamid 6 (PA6), Polyamid 6,6, Polyamid 6,1 und Polyamid 6/6,6; Polyethersulfone (PES); Polyetherketone (PEK); Polyethersulfide (PES) oder Mischungen davon eingesetzt.

In einer bevorzugten Ausführungsform ist der erfindungsgemäße Extrusionschaumstoff ausschließlich aus den Polymerkomponenten (P1) und (P2) aufgebaut und enthält kein (0 Gew.-%) thermoplastisches Polymer P3.

Aufgrund der Brandschutzbestimmungen in der Bauindustrie und anderen Branchen werden ein oder mehrere Flammschutzmittel zugegeben. Erfindungsgemäß enthält der Extrusionsschaumstoff zusätzlich 5 bis 15 Gewichtsanteile, bevorzugt 7 bis 10 Gewichtsanteile, bezogen auf 100 Gewichtsteile P, mindestens eines halogenhaltigen Polymeren als Flammschutzmittel (F1).

Bevorzugt weist das als Flammschutzmittel eingesetzte halogenhaltige Polymer ein mittleres Molekulargewicht im Bereich von 5.000 bis 300.000, insbesondere 20.000 - 150.000, bestimmt mittels Gelpermeationschromatographie (GPC) auf.

Das halogenierte Polymer weist in der thermogravimetrischen Analyse (TGA) einen Gewichtsverlust von maximal 5 Gew.-% bis zu einer Temperatur von 250°C, bevorzugt bei einer Temperatur bis 270°C und besonders bevorzugt bis zu einer Temperatur von 370°C auf.

Bevorzugte halogenierte Polymere weisen einen Bromgehalt im Bereich von 0 bis 80 Gewichtsprozent, bevorzugt 10 bis 75 Gewichtsprozent und einen Chlorgehalt im Bereich von 0 bis 50 Gewichtsprozent, bevorzugt 1 bis 25 Gewichtsprozent, bezogen auf das halogenierte Polymere, aufweist.

Bevorzugte halogenierte Polymere als Flammschutzmittel sind bromiertes Polystyrol oder Styrol-Butadien-Blockcopolymer mit einem Bromgehalt im Bereich von 40 bis 80 Gew.-%

Weitere bevorzugte halogenierte Polymere als Flammschutzmittel sind Polymere, welche Tetrabrombisphenol-A-Einheiten (TBBPA) aufweisen, beispielsweise Tetrabrombisphenol-A-Diglycidylether- Verbindungen (CAS-Nummer 68928-70-1 oder 135229-48-0).

Als Flammschutzmittel (F1) enthält der erfindungsgemäße Extrusionsschaumstoff bevorzugt bromierte Polystyrol-Oligomere bzw. Polymere oder ein Oligomeres oder Polymeres, welches Tetrabrombisphenol-A-Einheiten aufweist, beispielsweise Tetrabrombisphenol-A-diallylether.

Als Flammschutzsynergist (F2) enthält der Extrusionsschaumstoff erfindungsgemäß zusätzlich 0,5 bis 4 Gewichtsanteile, bevorzugt 1,5 bis 3 Gewichtsanteile, bezogen auf 100 Gewichtsteile P, Antimontrioxid oder Dicumyl oder Mischungen davon.

Zusätzlich kann der Extrusionsschaumstoff weitere Flammschutzmittel und Flammschutzsynergisten, beispielsweise Blähgraphit, roter Phosphor, Triphenylphosphat und 9,1 0-Dihydro-9-oxa-10-phosphaphenanthren-10-oxid enthalten. Ein weiteres geeignetes Flammschutzmittel ist beispielsweise Hexabromcyclododecan (HBCD), insbesondere die technischen Produkte, welche im Wesentlichen das α-, β- und γ-Isomer und vorzugsweise einen Zusatz von Dicumyl (2,3-Dimethyl-2,3-diphenylbutan) als Synergisten enthalten.

Gewünschtenfalls kann der Extrusionsschaumstoff zusätzlich 0 bis 10 Gewichtsanteile, bezogen auf 100 Gewichtsteile P, weiterer Zusatzstoffe (Z), wie Nukleierungsmittel, Füllstoffe (beispielsweise mineralische Füllstoffe wie Glasfasern), Weichmacher, IR-Absorber wie Ruß oder Graphit, Aluminiumpulver und Titandioxid, lösliche und unlösliche Farbstoffe sowie Pigmente enthalten. Bevorzugt wird Graphit und Ruß in Mengen von im Allgemeinen 0,05 bis 25 Gew.-%, insbesondere bevorzugt in Mengen von 2 bis 8 Gew.-%, bezogen auf P zugegeben werden. Geeignete Teilchengrößen für das Graphit liegen im Bereich von 1 bis 50 µm, bevorzugt im Bereich von 2 bis 10 µm.

Als wesentlicher Aspekt für die Gewährleistung konstanter Produkteigenschaften hat sich der Einsatz von UV-Stabilisatoren erwiesen. Speziell bei SMA führt starke UV-Einstrahlung zu einer sichtbaren Vergilbung und zur chemischen Umwandlung des Materials, die mit einer signifikanten Versprödung einhergeht. Für die Wahl geeigneter UV-Stabilisatoren spielt die Reaktivität mit SMA eine entscheidende Rolle. Während Stabilisatoren auf Basis von Benzotriazolen wie Tinuvin 234 die UV-Beständigkeit ohne Veränderung der Verarbeitungs- und Schaumeigenschaften verbessern kann, eignen sich Stabilisatoren auf Basis sterisch gehinderter Amine wie Uvinul 4050 und Tinuvin 770 in geringerem Maße für das erfindungsgemäße Stoffsystem. Bei erhöhten Temperaturen kann der Zusatz von sterisch gehinderter Amine zu einer Reaktion mit SMA unter Abspaltung gasförmiger Reaktionsprodukte führen.

Bevorzugt enthält der Extrusionsschaumstoff als Zusatzstoff (Z) einen UV-Stabilisator auf Basis von Benzotriazolen in Mengen im Bereich von 0,05 bis 5 Gewichtsanteilen, bevorzugt 0,1 bis 1 Gewichtsanteilen, bezogen auf 100 Gewichtsteile Polymer P.

Als Nukleierungsmittel können feinteilige, anorganische Feststoffe wie Talkum, Metalloxide, Silikate oder Polyethylenwachse in Mengen von im Allgemeinen 0,1 bis 10 Gewichtsanteilen bevorzugt 1 bis 3 Gewichtsanteilen bezogen auf P, eingesetzt werden. Der mittlere Teilchendurchmesser des Nukleierungsmittels liegt in der Regel im Bereich von 0,01 bis 100 µm, bevorzugt 1 bis 60 µm. Ein besonders bevorzugtes Nukleierungsmittel ist Talkum.

Zur Verbesserung der Wärmedämmung ist insbesondere die Zugabe von IR-Absorbern, wie, Graphit, Ruß, Aluminiumpulver, Titandioxid, Indoanilin-Farbstoffe, Oxonol-Farbstoffe oder Anthrachinon-Farbstoffe geeignet.

Bevorzugte Weichmacher sind Fettsäureester, Fettsäureamide und Phthalate, die in Mengen von 0,05 bis 10 Gewichtsanteilen, bezogen auf die Polymerkomponente P, eingesetzt werden können.

Weiterhin Gegenstand der Erfindung ist ein Verfahren zur Herstellung des erfindungsgemäßen Extrusionsschaumstoffs, umfassend die Stufen
(a) Erzeugen einer Polymerschmelze aus thermoplastischen Polymeren P enthaltend
   P1) 50 bis 100 Gewichtsteile, bevorzugt 55 bis 75 Gewichtsteile eines oder mehrerer Styrolcopolymeren, welche einpolymerisierte Maleinsäureanhydrid- oder Maleinsäureimid-Einheiten enthalten und eine Styrolgehalt im Bereich von 65 bis 90 Gew.-%, bezogen auf P1, aufweisen,
   P2) 0 bis 50 Gewichtsteile, bevorzugt 30 bis 45 eines oder mehrerer Styrol-Acrylnitril-Copolymeren (SAN) mit einem Styrolgehalt im Bereich von 65 bis 90 Gew.-%, bezogen auf P2,
   P3) 0 bis 15 Gewichtsteile, bevorzugt 0 bis 10 Gewichtsteile eines oder mehrerer thermoplastischen Polymeren aus der Gruppe bestehend aus von (P1) und (P2) verschiedenen Styrolpolymeren, Polyacrylaten, Polycarbonaten, Polyestern, Polyamiden, Polyethersulfonen, Polyetherketonen und Polyethersulfiden,
   wobei die Summe aus den Polymerkomponenten (P1), (P2) und (P3) der thermoplastischen Polymeren P 100 Gewichtsteile ergeben,
   F1) 5 bis 15 Gewichtsanteile, bevorzugt 7 bis 10 Gewichtsteile, bezogen auf P, mindestens eines halogenhaltigen Polymeren als Flammschutzmittel,
   F2) 0,5 bis 4 Gewichtsanteile, bevorzugt 1 bis 3 Gewichtsteile, bezogen auf P, eines Flammschutzsynergisten, ausgewählt aus Antimontrioxid und Dicumyl,
   Z) 0 bis 10 Gewichtsanteile, bevorzugt 0,1 bis 5 Gewichtsteile, bezogen auf P, weiterer Zusatzstoffe,
(b) Einbringen von
   T1) 1 bis 5 Gewichtsteile, bezogen auf P, Kohlendioxid als Treibmittel,
   T2) 1 bis 5 Gewichtsteile, bezogen auf P, Aceton als Cotreibmittel,
   T3) 0 bis 1 Gewichtsteile, bezogen auf P, eines oder mehrerer Co-Treibmittel ausgewählt aus der Gruppe bestehend aus C₁-C₄ Alkanen.
   in die Polymerschmelze zur Ausbildung einer schäumbaren Schmelze,
(c) Extrusion der schäumbaren Schmelze in einen Bereich niedrigeren Drucks unter Aufschäumen zu dem Extrusionsschaum.

Bevorzugt besteht die Polymerschmelze ausschließlich aus den Komponenten (P1) und (P2) in Bezug auf die thermoplastischen Polymere P.

Aufgrund der chemischen Struktur ist die thermische Stabilität begrenzt. Folglich führen hohe Schmelzetemperaturen und lange Verweilzeiten zur Degradation des Materials.

In Stufe (a) des Verfahrens wird die Polymerkomponente P erhitzt, um eine Polymerschmelze zu erhalten. Unter Ausbildung einer Polymerschmelze wird im Rahmen der Erfindung eine Plastifizierung der Polymerkomponente P im weiteren Sinne verstanden, d.h. die Überführung der festen Bestandteile der Polymerkomponente P in einen verformbaren oder fließfähigen Zustand. Dazu ist es notwendig, dass die Polymerkomponente P auf eine Temperatur oberhalb der Schmelz- beziehungsweise Glasübergangstemperatur erhitzt wird. Geeignete Temperaturen betragen im Allgemeinen mindestens 150°C, bevorzugt 160 bis 290°C, besonders bevorzugt 220 bis 260°C.

Die Temperatur der Polymerschmelze sollte so gering wie möglich gehalten werden, bevorzugt unter 260 °C. Bei höheren Temperaturen folgende Effekte auftreten: (i) CO2 kann unkontrolliert durch Reaktion von Styrol-Maleinsäureanhydrid-Copolymer (SMA) abgespalten und die Einstellung exakter Treibmittelmengen erschweren. (ii) Mischungen aus Styrol-Acrylnitril-Copolymeren (SAN) und Styrol-Maleinsäureanhydrid-Copolymer (SMA) können bei erhöhten Temperaturen zu Vernetzungen führen.

Das Erhitzen der Polymerkomponente P (Stufe (a) des erfindungsgemäßen Verfahrens) kann mittels beliebiger Einrichtungen, die auf dem Fachgebiet bekannt sind, wie mittels eines Extruders, eines Mischers (zum Beispiel eines Kneters) erfolgen. Bevorzugt ist der Einsatz von Aufschmelzextrudern (Primärextrudern). Stufe (a) des erfindungsgemäßen Verfahrens kann kontinuierlich oder diskontinuierlich durchgeführt werden, wobei eine kontinuierliche Fahrweise bevorzugt ist.

In Stufe (a) werden der Polymerschmelze die Komponenten (F1), (F2) und gegebenenfalls weitere Zusatzstoffe (Z), in den wie oben beschrieben Mengen, zugegeben. Möglich ist auch die Zugabe nach Stufe (a) oder Zugabe in Mischungen mit den Treibmittelkomponenten.

Stufe (b) des erfindungsgemäßen Verfahrens umfasst das Einbringen einer Treibmittelkomponente T in die in Stufe (a) hergestellte Polymerschmelze zur Ausbildung einer schäumbaren Schmelze.

Die Wahl geeigneter Treibmittel und Treibmittelzusammensetzungen spielt eine entscheidende Rolle während der Plattenherstellung und für die Eigenschaften der geschäumten Materialien. Die Verwendung von Kohlendioxid als einzigem Treibmittel führt aufgrund der hohen Diffusionsgeschwindigkeit von Kohlendioxid und den begrenzten Löslichkeiten bei den vergleichsweise hohen Verarbeitungstemperaturen zu starker Nukleierung und zum raschen Entweichen aus der Schaumstruktur. Eine Vielzahl an Treibmitteln hat für die erfindungsgemäß eingesetzten Polymeren P in Verbindung mit Flammschutzmitteln als ungeeignet erwiesen. Im Einzelnen zählen dazu:
(i) aliphatische und aromatische Alkohole, die unter Veresterung zur Ringöffnung des Maleinsäureanhydrid und damit zu einer deutlichen Reduzierung der Druckfestigkeiten und Warmformbeständigkeiten führen.
(ii) Dimethylether, das in Kombination mit bromierten Flammschutzmitteln zur Bildung von karzinogenen organischen Spezies führen kann.
(iii) diverse halogenierte Treibmittel scheiden mittlerweile aufgrund der Anforderungen an den Klimaschutz aus.

Erfindungsgemäß werden daher als Treibmittel (T1) zusätzlich 1 bis 5 Gewichtsteile, bevorzugt, 2,5 bis 4,5 Gewichtsteile, bezogen auf 100 Gewichtsteile P, Kohlendioxid als Treibmittel eingesetzt.

Als Co-Treibmittel T(2) werden zusätzlich 1 bis 5 Gewichtsteile, bevorzugt 1 bis 3 Gewichtsteile, bezogen auf 100 Gewichtsteile P, Aceton zugegeben.

Als weiterer Co-Treibmittel (T3) können 0 bis 1 Gewichtsteile, bevorzugt 0,1 bis 1,0 Gewichtsteile, bezogen auf 100 Gewichtsteile P, eines oder mehrerer Co-Treibmittel ausgewählt aus der Gruppe bestehend aus C₁-C₄ Alkanen zugegeben werden. Besonderes bevorzugt wird Isobutan als Co-Treibmittel (T3).

Die erfindungsgemäß eingesetzten Treibmittel und Co-Treibmittel führen insbesondere bei hohen Plattendicken zu besseren Oberflächen und Dimensionsstabilität. Die Anwesenheit von Aceton bzw. Alkanen ermöglicht eine stärkere Plastifizierung während der Schmelzeverarbeitung und Kalibrierung.

In den Treibmitteln und Co-Treibmitteln (T1), (T2) und (T3) kann Wasser enthalten sein. Wasser gelangt in die Treibmittelkomponente T vor allem durch die Verwendung von technischen Chemikalien.

In einer bevorzugten Ausführungsform sind die Treibmittel im Wesentlichen wasserfrei. Besonders bevorzugt sind Mischungen von Kohlendioxid und Aceton als auch Mischungen von Kohlendioxid, Aceton und iso-Butan. Bevorzugt weist die Polymerschmelze nach Stufe b) einen Wassergehalt von maximal 1 Gew.-%, besonders bevorzugt von weniger als 0,1 Gew.-% auf.

Die Treibmittelkomponente T wird der Polymerschmelze in einem Anteil von insgesamt 1 bis 12 Gew.-%, bevorzugt 1 bis 8 und insbesondere bevorzugt 1,5 bis 7 Gew.-% (jeweils bezogen auf P zugesetzt.

Die Treibmittel (T1), (T2) und (T3) können in die geschmolzene Polymerkomponente P durch jede dem Fachmann bekannte Methode eingebracht werden. Geeignet sind beispielsweise Extruder oder Mischer (zum Beispiel Kneter). In einer bevorzugten Ausführungsform wird das Treibmittel mit der geschmolzenen Polymerkomponente P unter erhöhtem Druck gemischt. Der Druck muss dabei so hoch sein, dass im Wesentlichen ein Aufschäumen des geschmolzenen Polymermaterials verhindert und eine homogene Verteilung der Treibmittelkomponente T in der geschmolzenen Polymerkomponente P erreicht wird. Geeignete Drücke sind 50 bis 500 bar (absolut), bevorzugt 100 bis 300 bar (absolut), besonders bevorzugt 150 bis 250 bar (absolut). Die Temperatur in Stufe (b) des erfindungsgemäßen Verfahrens muss so gewählt sein, dass das polymere Material im geschmolzenen Zustand vorliegt. Dazu ist es notwendig, dass die Polymerkomponente P auf eine Temperatur oberhalb der Schmelz- beziehungsweise Glasübergangstemperatur erhitzt wird. Geeignete Temperaturen betragen im Allgemeinen mindestens 150 °C, bevorzugt 160 bis 290 °C, besonders bevorzugt 220 bis 260 °C. Stufe (b) kann kontinuierlich oder diskontinuierlich durchgeführt werden, bevorzugt wird Stufe (b) kontinuierlich durchgeführt.

Die Zugabe der Treibmittel kann im Aufschmelzextruder (Primärextruder) oder in einer nachgelagerten Stufe erfolgen. Bevorzugt erfolgt die Zugabe der Treibmittel direkt im Aufschmelzextruder.

In einer bevorzugten Ausführungsform wird die schäumbare Polymerschmelze in dem Fachmann bekannten XPS-Extrudern durchgeführt, beispielsweise über einem Tandem-Aufbau aus Aufschmelzextruder (Primärextruder) und Kühlextruder (Sekundärextruder). Das Verfahren kann kontinuierlich und diskontinuierlich durchgeführt werden, wobei die Polymerkomponente P im Primärextruder aufgeschmolzen wird (Stufe (a)) und die Zugabe des Treibmittels (Stufe (b)) zur Ausbildung einer schäumbaren Schmelze ebenfalls im Primärextruder erfolgt. Die Einmischung und Lösung des Treibmittels kann auch über statische Mischorgane nach Stufe (a) erfolgen, beispielsweise durch statische Mischer.

Stufe (c) des erfindungsgemäßen Verfahrens umfasst das Aufschäumen der schäumbaren Schmelze, um einen Extrusionsschaumstoff zu erhalten. Dazu wird die mit Treibmittel versehene schäumbare Schmelze im Sekundärextruder auf eine für das Schäumen geeignete Temperatur gekühlt. Zudem kann das Kühlen der Schmelze teilweise oder vollständig durch statisch arbeitende Schmelzekühler, beispielsweise statische Wärmetauscher (z.B. verfügbar von Fa. Fluitec oder Fa. Sulzer) erfolgen.

Die Schmelze wird dazu durch eine geeignete Vorrichtung, beispielsweise eine Schlitzdüse, gefördert. Die Schlitzdüse wird mindestens auf die Temperatur der treibmittelhaltigen Polymerschmelze beheizt. Bevorzugt liegt die Temperatur der Düse bei 60 bis 230°C. Besonders bevorzugt liegt die Temperatur der Düse bei 110 bis 170°C.

Die treibmittelhaltige Polymerschmelze wird durch die Düse in einen Bereich überführt, in dem ein niedrigerer Druck herrscht als in demjenigen Bereich, in dem die schäumbare Schmelze vor Extrusion durch die Düse gehalten wird. Der niedrigere Druck kann überatmosphärisch oder unteratmosphärisch sein. Bevorzugt ist die Extrusion in einen Bereich mit atmosphärischem Druck.

Stufe (c) wird ebenfalls bei einer Temperatur durchgeführt, bei der das zu schäumende polymere Material in geschmolzenem Zustand vorliegt. Im Allgemeinen bei Temperaturen von 80 bis 170°C, besonders bevorzugt bei 110 bis 160°C. Dadurch, dass die treibmittelhaltige Polymerschmelze in Stufe (c) in einen Bereich überführt wird, in dem ein niedrigerer Druck herrscht, wird das Treibmittel in den gasförmigen Zustand überführt. Durch den großen Volumenanstieg wird die Polymerschmelze ausgedehnt und aufgeschäumt.

Der Druck an der Düse muss ausreichend hoch gewählt werden, um ein vorzeitiges Aufschäumen in der Düse zu vermeiden, dazu sind Drücke von mindestens 50 bar, bevorzugt 60 - 180 bar, besonders bevorzugt 80-140 bar geeignet.

Die geometrische Form des Querschnitts der nach dem erfindungsgemäßen Verfahren erhältlichen Extrusionsschaumstoffe wird im Wesentlichen durch die Wahl der Düsenplatte und ggf. durch geeignete Nachfolgeeinrichtungen wie Plattenkalibrierungen, Rollenbahnabzüge oder Bandabzüge bestimmt und ist frei wählbar.

Die Oberflächenqualität hängt bei Verwendung der erfindungsgemäßen Material- und Treibmittelzusammensetzung von der Oberflächentemperatur der Kalibriereinrichtung ab. Oberflächentemperaturen unterhalb von 50 °C führen zu starker Auskühlung der Schaumoberfläche und in der Folge zur Bildung von Längs- und Querrissen als auch zu Dickenunterschieden zwischen Rand und Mitte der Platte. Bevorzugt werden daher Kalibriereinrichtungen eingesetzt, die durch externe Quellen wie Öltemperierungen oder elektrischen Temperierungen beheizt werden können. Die Oberflächentemperaturen betragen bevorzugt mehr als 50 °C, besonders bevorzugt mehr als 100 °C. Bevorzugt ist zudem der Einsatz antihaftender Oberflächen, beispielsweise teflonbeschichtete Metalle oder mit Teflonfolien abgedeckte Metalle.

Die nach dem erfindungsgemäßen Verfahren erhältlichen Extrusionsschaumstoffe weisen bevorzugt einen rechtwinkligen Querschnitt auf. Die Dicke der Extrusionsschaumstoffe wird dabei durch die Höhe des Düsenplattenschlitzes bestimmt. Die Dicke beträgt 20 - 300 mm, bevorzugt 20 - 200 mm. Die Breite der Extrusionsschaumstoffe wird durch die Breite des Düsenplattenschlitzes bestimmt. Die Länge der Extrusionsschaumstoffteile wird in einem nachgelagerten Arbeitsschritt durch bekannte dem Fachmann geläufige Verfahren wie Verkleben, Verschwei-βen, Zersägen und Zerschneiden bestimmt. Insbesondere bevorzugt sind Extrusionsschaumstoffteile mit einer plattenförmigen Geometrie. Plattenförmig bedeutet, dass die Abmessung der Dicke (Höhe) im Vergleich zu der Abmessung der Breite und der Abmessung der Länge des Formteils klein ist.

Für die Verbesserung der UV-Beständigkeit des Materials, zur Erhöhung der Oberflächenqualität und zur Reduzierung der Oberflächentemperatur können zudem Folienbeschichtungen im Anschluss an die Kalibrierung auf das Material aufgebracht werden. Die Folien enthalten vorzugsweise UV-Stabilisatoren und / oder Licht-Absorber und / oder Reflektoren und / oder Flammschutzmittel in erhöhter Konzentration im Vergleich zum geschäumten Material.

Gegenstand der Erfindung ist auch die Verwendung der erfindungsgemäßen Extrusionsschaumstoffe und der daraus erhältlichen Formkörper. Bevorzugt ist die Verwendung als Isoliermaterial insbesondere in der Bauindustrie, unter- und oberirdisch, zum Beispiel für Fundamente, Wände, Böden und Dächer. Bevorzugt ist ebenfalls die Verwendung als Strukturschaum, insbesondere für Leichtbauanwendungen und als Kernmaterial für Verbundanwendungen.

Der erfindungsgemäße Extrusionsschaumstoff weist gute Isolationseigenschaften, gute Lösungsmittel- und insbesondere eine gute Wärmeformbeständigkeit auf. Bevorzugt ist die Verwendung als Isoliermaterial insbesondere in der Bauindustrie, unter- und oberirdisch, z.B. für Fundamente, Wände, Böden und speziell Dächer. Er vereint damit drei wichtige Eigenschaften in einem Werkstoff und ermöglicht somit den universellen Einsatz dieses Werkstoffs in den unterschiedlichsten Anwendungen, bei denen bisher der Einsatz verschiedener und für den jeweiligen Einsatz speziell angepasster Werkstoffe notwendig war. Der erfindungsgemäße Extrusionsschaumstoff kann vorzugsweise für die Wärmedämmung von Dächeren eingesetzt werden, die sowohl während der Installation (Kontakt mit heißem Bitumen) und während der Lebenszeit (erhöhte Gebrauchstemperatur durch Abdeckung mit stark absorbierender Bitumenbahn) erfordern. Weitere Anwendungsmöglichkeiten sind die Dämmung von Warmwasserspeichern und der Einsatz für Leichtbauanwendungen, beispielsweise als Kernmaterial für Sandwichanwendnungen.

Der erfindungsgemäße Extrusionsschaumstoff ist ohne den Einsatz von Treibmitteln, die aus Umweltgesichtspunkten oder in Bezug auf die Brandschutzbestimmungen problematisch sind, zugänglich. Darüber hinaus bietet er trotz niedriger Dichte im Vergleich zu den Extrusionsschaumstoffen aus dem Stand der Technik gute Isolationseigenschaften und mechanische Eigenschaften bei gleichzeitig hoher Lösungsmittel- und Wärmeformbeständigkeit, die in der Regel mindestens 20 °C über gewöhnlichem Polystyrol-Extrusionsschaumstoff (XPS) liegt. Beispielsweise liegt die Dimensionsstabilität ohne mechanische Belastung bei mindestens 100 °C(max. zulässige Dimensionsänderung < 3 %).

### Beispiele

| Eingesetzte Rohstoffe | |
|---|---|
| Luran® 2580 | SAN mit einem Acrylnitrilgehalt von 25 Gew.-% und einer Viskositätszahl von ca. 80 ml/g (Handelsprodukt der Styrolution) |
| Luran® VLN: | SAN mit einem Acrylnitrilgehalt von ca. 25 % und einer Viskositätszahl von ca. 65 ml/g (Handelsprodukt der Styrolution) |
| Xiran® SZ 26080 | Styrol-Maleinsäureanhydrid-Copolymer (SMA) einem Maleinsäuregehalt von 26 Gew.-% und einer Viskositätszahl von 80 ml/g (Handelsprodukt der Polyscope) |
| SANMA | Styrol-Acrylnitril-Maleinsäureanhydrid-Terpolymer der BASF mit einem Ac-rylnitrilgehalt von 24 Gew.-% und einem Maleinsäuregehalt von 2,1 Gew.-% |
| Graphit | Fa. Kropfmühl, Typ UF 99.5 |
| ATO | Antimontrioxid Ultrafine, Fa.Campine |
| TBBPA | F-2400, p-TBBPA, der ICL |
| Tinuvin® 234 | 2-(2H-benzzotriazol-2-yl)4,6-bis(1-ethyl-1-phenylethylphenol, UV-Stabilisator der BASF SE |

### Allgemeine Arbeitsvorschrift

Die Herstellung der erfindungsgemäßen Schaumstoffplatten erfolgte auf einer Tandem-Extrusionsanlage. Die eingesetzten Copolymere wurden zusammen mit Flammschutzmittel und Additiven kontinuierlich einem Aufschmelzextruder zugeführt. Die Flammschutzmittel lagen als Batches. Durch eine in dem Aufschmelzextruder (ZSK 120) eingebrachte Injektionsöffnung wurden kontinuierlich die Treibmittel (CO2, Ethanol, Aceton, i-Butan) zugeführt. Der Gesamtdurchsatz inkl. der Treibmittel betrug 750 kg/h. Die treibmittelhaltige Schmelze wurde in einem nachfolgenden Kühlextruder (ZE 400) abgekühlt und durch eine Schlitzdüse extrudiert. Die aufschäumende Schmelze wurde durch eine beheizte Kalibrierung, deren Oberflächen mit Teflon ausgestattet waren, über ein Rollenband abgezogen und zu Platten geformt. Typische Plattendimensionen vor der mechanischen Bearbeitung lagen bei ca. 700 mm Breite und 50 mm Dicke.

### Beispiele 1-11

In den Beispielen 1-11 wurden jeweils 10 Teile p-TBBPA als Flammschutzmittel, 1,5 Teile Antimontrioxid als Flammschutzsynergist und 0,2 Gewichtsteile Tinuvin® 234 zusätzlich zu 100 Gewichtsteilen Polymer zugegeben. In Beispiel 5 wurden statt 1,5 Teile Antimontrioxid 2,5 Anteile verwendet. In Beispiel 10 wurde außerdem 1,0 Gewichtsteile Graphit UF 99.5 als IR-Absorber zu 100 Gewichtsteilen Polymer zugegeben.

In den Beispielen 1 - 10 wurden als Treibmittel (T1) Kohlendioxid und als Co-Treibmittel (T2) Aceton jeweils zusätzlich auf 100 Gewichtsteile Polymere zugegeben, die Gewichtsanteile sind der Tabelle zu entnehmen. In Beispiel 11 wurden als Treibmittel (T1) Kohlendioxid, als Co-Treibmittel (T2) Aceton und als Co-Treibmittel (T3) iso-Butan jeweils zusätzlich auf 100 Gewichtsteile Polymere zugegeben, die Gewichtsanteile sind der Tabelle zu entnehmen.

Polymerzusammensetzung, Verfahrensparameter und Eigenschaften der Extrusionsschaumstoffplatten sind in Tabelle 1 zusammengestellt.

**Tabelle 1:**

| Beispiel | B1 | B2 | B3 | B4 | B5 | B6 | B7 | B8 | B9 | B10 | B11 |
|---|---|---|---|---|---|---|---|---|---|---|---|
| Luran® 2580 | 40 | | | 30 | 40 | 40 | 40 | | 40 | | |
| Luran® VLN | | 40 | 40 | | | | | | | 40 | 40 |
| Xiran® SZ 26080 | 60 | 60 | 60 | 70 | 60 | 60 | 60 | 60 | 55 | 60 | 60 |
| SANMA | | | | | | | | 40 | 5 | | |
| Kohlendioxid | 3.5 | 3.5 | 3.5 | 3.5 | 3.5 | 3.5 | 3.5 | 3.5 | 3.5 | 3.5 | 3.5 |
| Aceton | 3.0 | 3.0 | 2.5 | 3.0 | 3.0 | 2.0 | 3.5 | 3.0 | 3.0 | 3.0 | 2.6 |
| iso-Butan | | | | | | | | | | | 0.4 |
| Prozesstemperatur nach Aufschmelzextruder | 243 | 233 | 237 | 244 | 243 | 246 | 240 | 236 | 240 | 233 | 235 |
| Düsendruck (bar) | 105 | 102 | 106 | 113 | 107 | 112 | 101 | 105 | 108 | 108 | 110 |
| Temperatur Kalibrator (°C) | 135 | 135 | 135 | 135 | 135 | 135 | 135 | 135 | 135 | 135 | 135 |
| Schaumdichte (g/l) | 37 | 36 | 36 | 38 | 43 | 39 | 37 | 36 | 36 | 37 | 35 |
| Plattendicke (mm) | 50 | 50 | 50 | 50 | 50 | 50 | 45 | 50 | 50 | 50 | 50 |
| Warmformbeständigkeit ² | < 105 | < 105 | < 105 | < 110 | < 105 | < 110 | < 105 | < 105 | < 105 | < 105 | < 105 |
| Glasübergangstemperatur Polymer- / Flammschutz - Mi-schung (°C) ¹ | 130 | 129 | 129 | 135 | 130 | 130 | 130 | 132 | 128 | 129 | 129 |
| Warmformbeständigkeit >100°C² | ja | ja | ja | ja | ja | ja | ja | ja | ja | ja | ja |
| Brandbeständig nach DIN 4102 B2 | ja | ja | ja | ja | ja | ja | ja | ja | ja | ja | ja |
| Einstufung Flammschutz als Polymer | ja | ja | ja | ja | ja | ja | ja | ja | ja | ja | ja |
| UV-Beständigkeit³ | ja | ja | ja | ja | ja | ja | ja | ja | ja | ja | ja |
| Beständigkeit bei Bitumenab-deckung 4 | ja | ja | ja | ja | ja | ja | ja | ja | ja | ja | ja |
| Oberflächenrisse⁵ | nein | nein | nein | nein | nein | nein | nein | nein | nein | nein | nein |
| Vernetzung⁶ | nein | nein | nein | nein | nein | nein | nein | nein | nein | nein | nein |
| ungewünschte Abbauprodukte 7 | nein | nein | nein | nein | nein | nein | nein | nein | nein | nein | nein |
| Reaktion mit Treibmittel⁸ | nein | nein | nein | nein | nein | nein | nein | nein | nein | nein | nein |
| Dimensionstreue⁹ | ja | ja | ja | ja | ja | ja | ja | ja | ja | ja | ja |
| Gaslöcher¹⁰ | nein | nein | nein | nein | nein | nein | nein | nein | nein | nein | nein |
| Korrosion/Degradation¹¹ | nein | nein | nein | nein | nein | nein | nein | nein | nein | nein | nein |

| | | | | | | | | | | | |
|---|---|---|---|---|---|---|---|---|---|---|---|
| ¹ Glasübergangstemperatur der Polymermischung gemessen mittels DSC nach DIN 53765 (ISO 11357-2) bei einer Aufheizrate von 20 K/min ²maximale zulässige lineare Dimensionsänderung von 3 %, analysiert in alle drei Plattenrichtungen (längs, quer, senkrecht zur Extrusionsrichtung) bei einer isothermen Lagerung unter Temperaturbelastung von mindestens 6 h (Analyse an Plattenmaterialien mit einer Dicke von 50 mm eine Woche nach der Produktion) ³Bestimmung der UV-Beständigkeit durch Yellowing-Index, bestimmt an kompaktierten Reinmaterial, maximal zulässiger Anstieg im Gelbgrad E1330 um 15 % nach 1 000 h Bestrahlung (outdoor-Belichtung) ⁴Beständigkeit gegen Dimensionsänderung / partielles Schmelzen bei Aufbringen von geschmolzenem Bitumen mit einer Temperatur von 185 °C, Versagenskriterium entspricht entweder Bildung von Gasblasen im Bitumen oder irreversibler Plattenverformung um mehr als 2 mm ⁵Visuelle Beurteilung der Plattenoberfläche auf Oberflächenrisse ⁶ Nachweis vernetzter Produkte durch Lösung des Endprodukts in THF und Nachweis schwerlöslicher bzw. nichtlöslicher Bestandteile ⁷Ungewünschte Abbauprodukte, Nachweis durch Spurenanalytik mittels GC-MS ⁸Reaktion mit Treibmittel, Nachweis durch IR-Spektroskopie mittels Vergleich zum Ausgangspektrum ⁹ Dimensionstreue innerhalb der geforderten Spezifikationen (Unterteilung der genutzten Plattenfläche in Kernbereich und je zwei Randbereiche auf jeder Seite, mittlere Dicke in jedem der Bereich darf um maximal ± 2.5 % vom Nennmaß abweichen) ¹⁰Visuelle Beurteilung des Plattenquerschnitts auf Löcher größer 10 mm² ¹¹ Korrosion / Degradation durch korrosiven Angriff der Schnecken, Zylinder und Flansche, massiver Angriff bedingt Austausch der Elemente nach weniger als 6 Monaten | | | | | | | | | | | |

## Patentansprüche

1. Extrusionsschaumstoff auf Basis von thermoplastischen Polymeren P, enthaltend
P1) 50 bis 100 Gewichtsteile eines oder mehrerer Styrolcopolymeren, welche einpolymerisierte Maleinsäureanhydrid- oder Maleinsäureimid-Einheiten enthalten und einen Styrolgehalt im Bereich von 65 bis 90 Gew.-%, bezogen auf P1, aufweisen,
P2) 0 bis 50 Gewichtsteile eines oder mehrerer Styrol-Acrylnitril-Copolymeren (SAN) mit einem Styrolgehalt im Bereich von 65 bis 90 Gew.-%, bezogen auf P2,
P3) 0 bis 15 Gewichtsteile eines oder mehrerer thermoplastischen Polymeren aus der Gruppe bestehend aus von P1 und P2 verschiedenen Styrolpolymeren, Polyacrylaten, Polycarbonaten, Polyestern, Polyamiden, Polyethersulfonen, Polyetherketonen und Polyethersulfiden,
wobei die Summe aus den Polymerkomponenten (P1), (P2) und (P3) der thermoplastischen Polymeren P 100 Gewichtsteile ergeben,
F1) 5 bis 15 Gewichtsanteile, bezogen auf P, mindestens eines halogenhaltigen Polymeren als Flammschutzmittel,
F2) 0,5 bis 4 Gewichtsanteile, bezogen auf P, mindestens eines Flammschutzsynergisten, ausgewählt aus Antimontrioxid und Dicumyl,
Z) 0 bis 10 Gewichtsanteile, bezogen auf P, weiterer Zusatzstoffe.

2. Extrusionsschaumstoff nach Anspruch 1, **dadurch gekennzeichnet, dass** die thermoplastischen Polymeren P eine Glasübergangstemperatur Tg von 120°C oder höher, gemessen mittels DSC nach DIN 53765 bei einer Aufheizrate von 20 K/min, aufweisen.

3. Extrusionsschaumstoff nach Anspruch 1 oder 2, **dadurch gekennzeichnet, dass** er als Flammschutzmittel F1 ein Polymeres, welches Tetrabrombisphenol-A-Einheiten aufweist, enthält.

4. Extrusionsschaumstoff nach einem der Ansprüche 1 bis 3, **dadurch gekennzeichnet, dass** er als Zusatzstoff einen UV-Stabilisator enthält.

5. Extrusionsschaumstoff nach einem der Ansprüche 1 bis 4, **dadurch gekennzeichnet, dass** er eine Dichte im Bereich von 20 bis 150 kg/m³ und eine Zellzahl im Bereich von 1 bis 30 Zellen/mm aufweist.

6. Verfahren zur Herstellung eines Extrusionsschaumstoffs umfassend die Stufen
(a) Erzeugen einer Polymerschmelze aus thermoplastischen Polymeren P enthaltend
P1) 50 bis 100 Gewichtsteile eines oder mehrerer Styrolcopolymeren, welche einpolymerisierte Maleinsäureanhydrid- oder Maleinsäureimid-Einheiten enthalten und einen Styrolgehalt im Bereich von 65 bis 90 Gew.-%, bezogen auf P1,
P2) 0 bis 50 Gewichtsteile eines oder mehrerer Styrol-Acrylnitril-Copolymeren (SAN) mit einem Styrolgehalt im Bereich von 65 bis 90 Gew.-%, bezogen auf P2,
P3) 0 bis 15 Gewichtsteile eines oder mehrerer thermoplastischen Polymeren aus der Gruppe bestehend aus von P1 und P2 verschiedenen Styrolpolymeren, Polyacrylaten, Polycarbonaten, Polyestern, Polyamiden, Polyethersulfonen, Polyetherketonen und Polyethersulfiden,
wobei die Summe aus den Polymerkomponenten (P1), (P2) und (P3) der thermoplastischen Polymeren P 100 Gewichtsteile ergeben,
F1) 5 bis 15 Gewichtsanteile, bezogen auf P, mindestens eines halogenhaltigen Polymeren als Flammschutzmittel,
F2) 0,5 bis 4 Gewichtsanteile, bezogen auf P, mindestens eines Flammschutzsynergisten, ausgewählt aus Antimontrioxid und Dicumyl,
Z) 0 bis 10 Gewichtsanteile, bezogen auf P, weiterer Zusatzstoffe.
(b) Einbringen von
T1) 1 bis 5 Gewichtsteile, bezogen auf P, Kohlendioxid als Treibmittel,
T2) 1 bis 5 Gewichtsteile, bezogen auf P, Aceton als Cotreibmittel,
T3) 0 bis 1 Gewichtsteile, bezogen auf P, eines oder mehrerer Co-Treibmittel ausgewählt aus der Gruppe bestehend aus C₁-C₄ Alkanen.
in die Polymerschmelze zur Ausbildung einer schäumbaren Schmelze,
(c) Extrusion der schäumbaren Schmelze in einen Bereich niedrigeren Drucks unter Aufschäumen zu dem Extrusionsschaum.

7. Verfahren nach Anspruch 6, **dadurch gekennzeichnet, dass** die Polymerschmelze in den Stufen a) und b) auf eine Temperatur im Bereich von 235 bis 265°C gehalten wird.

8. Verfahren nach Anspruch 6 oder 7, **dadurch gekennzeichnet, dass** die Polymerschmelze vor dem Aufschäumen in Stufe c) auf einem Druck im Bereich von 80 bis 140 bar gehalten wird.

9. Verfahren nach einem der Ansprüche 6 bis 8, **dadurch gekennzeichnet, dass** die schäumbare Schmelze in Stufe c) durch eine Schlitzdüse bei einer Temperatur im Bereich von 120 bis 140°C extrudiert wird.

10. Verfahren nach einem der Ansprüche 6 bis 9, **dadurch gekennzeichnet, dass** die Polymerschmelze aus thermoplastischen Polymere P ausschließlich aus den Komponenten P1 und P2 besteht.

11. Verfahren nach einem der Ansprüche 6 bis 10, **dadurch gekennzeichnet, dass** die Polymerschmelze nach Stufe b) einen Wassergehalt von maximal 1 Gew.-% aufweist.

12. Verfahren nach einem der Ansprüche 6 bis 11, **dadurch gekennzeichnet, dass** in Stufe b)
T1) 2,5 bis 4,5 Gewichtsteile Kohlendioxid und
T2) 1,0 bis 3,0 Gewichtsteile Aceton eingebracht werden.

13. Verfahren nach Anspruch 12, **dadurch gekennzeichnet, dass** in Stufe b)
T1) 2,5 bis 4,5 Gewichtsteile Kohlendioxid,
T2) 1,0 bis 3,0 Gewichtsteile Aceton, und
T3) 0,1 bis 1,0 Gewichtsteile Isobutan eingebracht werden.

14. Verwendung des Extrusionsschaumstoffs nach einem der Ansprüche 1 bis 5 als Isoliermaterial oder Strukturschaumstoff.
